# EUROPÄISCHE PATENTSCHRIFT

(11) **EP 3 894 821 B1**
(45) Veröffentlichungstag und Bekanntmachung des Hinweises auf die Patenterteilung: **29.06.2022**
(21) Anmeldenummer: 20745164.2
(22) Anmeldetag: 22.07.2020
(51) Int. Cl.: G01M 3/20

(54) **DICHTHEITSPRÜFUNG EINES FLÜSSIGKEITSGEFÜLLTEN PRÜFLINGS**
LEAK TEST OF A LIQUID-FILLED TEST SPECIMEN
TEST D'ÉTANCHÉITÉ D'UN SPÉCIMEN D'ESSAI REMPLI DE LIQUIDE

(30) Priorität: 08.08.2019 DE 102019121462
(43) Veröffentlichungstag der Anmeldung: 20.10.2021
(73) Patentinhaber: Inficon GmbH, 50968 Köln (DE)
(72) Erfinder: REISMANN, Maximilian, 50968 Köln (DE); WETZIG, Daniel, 50968 Köln (DE)
(74) Vertreter: dompatent von Kreisler Selting Werner - Partnerschaft von Patent- und Rechtsanwälten mbB
(86) Internationale Anmeldenummer: PCT/EP2020/070661
(87) Internationale Veröffentlichungsnummer: WO 2021/023513

(56) Entgegenhaltungen:
- EP-B1- 1 522 838
- US-A- 5 131 263
- US-A1- 2001 016 278
- US-A1- 2013 199 274
- US-A1- 2017 108 401

## Beschreibung

Die Erfindung betrifft ein Verfahren zur Leckdetektion an einem flüssigkeitsgefüllten Prüfling.

Es sind verschiedene Methoden zur industriellen Dichtheitsprüfung bekannt, bei denen ein mit Prüfgas befüllter Prüfling in einer Prüfkammer einem Unterdruck ausgesetzt wird, indem die Prüfkammer evakuiert wird. Auf Grund des resultierenden Druckunterschiedes gelangt Prüfgas durch ein mögliches Leck in dem Prüfling in die Prüfkammer, von wo es einem Sensor zum Detektieren des Prüfgases zugeführt wird. Beispielsweise werden Lebensmittelverpackungen zur Leckageprüfung aktiv mit einem Prüfgas, wie z.B Helium, befüllt und anschließend in die Prüfkammer eingebracht. Alternativ sind auch Verfahren bekannt, bei denen Gase als Prüfgas verwendet werden, die in dem Prüfling bereits bei Einbringen des Prüflings in die Prüfkammer enthalten sind. Ein aktives Befüllen des Prüflings mit Prügas ist dann nicht erforderlich.

Ein solches Verfahren ist beispielsweise in DE 10 2014 224 799 A1 beschrieben. Bei dem in dem Prüfling bei dessen Einbringen in die Folienkammer bereits enthaltenden Gas kann es sich um Bestandteile von Luft, wie z.B. Stickstoff, Sauerstoff oder Kohlendioxid handeln. Es können auch Gase als Prüfgas verwendet werden, welche Aromastoffe eines in dem Prüfling enthaltenen Produkts enthalten oder aus diesen bestehen, wie z.B. Kaffeearomastoffe im Fall von Kaffee. Eine weitere Möglichkeit besteht darin, Gase als Prüfgas zu verwenden, welche von einem in dem Prüfling enthaltenen Produkt, wie z.B. einem Lebensmittel, erzeugt werden. Im Fall von Kaffee kann dies CO₂ sein, welches sich nach wenigen Stunden innerhalb einer Kaffeeverpackung bildet. Weiterer Stand der Technik ist aus US 2001/016278 A1, EP 1 522 838 B1, US 5 131 263 A, US 2017/108401 A1 und US 2013/199274 A1 bekannt.

Dem gegenüber befasst sich die Erfindung mit der Leckagedetektion an einem Prüfling, der mit einer Flüssigkeit gefüllt ist und bei dem kein in dem Prüfling vorhandenes Gas als Prüfgas zur Verfügung steht und der auch nicht mit einem separaten Prüfgas aktiv befüllt werden soll oder kann. Dies ist beispielsweise bei Batterien der Fall, die mit Elektrolytflüssigkeiten befüllt sind, wie z.B. eine mit Dimethylcarbonat als Elektrolyt befüllten Lithium-Ionen-Batterie.

Bei den oben beschriebenen Verfahren, die auf dem Prinzip der Detektion von Gasen, die aus dem Inneren des Prüflings nach außen strömen, basieren, wird das ausgetretene Gas oftmals mit Hilfe eines Gasdetektors detektiert. Der Prüfling wird dabei mittels des Vakuumverfahrens auf Dichtheit geprüft. Zur Dichtheitsprüfung wird der Prüfling in eine Vakuumkammer eingebracht. Gas, welches durch ein im Prüfling vorhandenes Leck in die Vakuumkammer austritt, wird mit dem Vakuumsystem kontinuierlich aus der Vakuumkammer heraus gefördert. Mit einem geeigneten Sensor wird das Leckagegas im Vakuumsystem selektiv nachgewiesen. Bei ausreichend niedrigem Druck bewegt sich das Leckagegas ausreichend schnell durch Diffusion oder molekular frei zum Sensor hin.

Alternativ zu den oben beschriebenen Verfahren, die auf dem Prinzip der Detektion von Gasen, die aus dem Inneren des Prüflings nach außen strömen, basieren, ist es bekannt, das ausgetretene Gas mit Hilfeeines Trägergases dem Gasdetektor zuzuführen. Das Trägergasverfahren wird insbesondere dann verwendet, wenn der Arbeitsdruck in der Vakuumkammer sehr viel größer als 1mbar ist. In solchen Fällen ist die Diffusionsgeschwindigkeit des nachzuweisenden Leckagegases in der Vakuumkammer zu langsam. Ein solches Trägergasverfahren ist beispielsweise in WO 2005/054806 A1 beschrieben, indem ein Trägergasstrom durch eine einen Prüfling enthaltene Prüfkammer hindurchgeführt wird. Die Prüfkammer wird dabei mit dem Trägergas gespült. Durch den Prüfling austretendes Prüfgas wird mit dem Trägergasstrom aus der Prüfkammer heraus transportiert und einem Prüfgassensor zugeführt.

In der Kälte-/Klima-Industrie ist es bekannt, mit einem flüssigen Kältemittel befüllte Prüflinge - z.B. Wärmetauscher - auf Dichtheit zu prüfen. Bei diesen Prüflingen besteht eine Besonderheit darin, dass das flüssige Kältemittel unter Überdruck in dem Prüfling enthalten ist, um die flüssige Phase des Kältemittels zu erhalten. Zur Dichtheitsprüfung solcher mit flüssigem Kältemittel befüllter Prüflinge wird an den auf Dichtheit zu prüfenden Bereichen des Prüflings eine Schnüffelsonde entlanggeführt, die aus einem Leck in die äußere Atmosphäre austretendes und dabei verdampfendes Kältemittel ansaugt und einem Gasdetektor zuführt. Die Schnüffelsonde saugt Luft aus der Umgebung des Prüflings an und nimmt dabei austretendes Leckagegas auf, das mit einem entsprechenden Sensor selektiv ermittelt und dabei von den angesaugten Luftkomponenten unterschieden wird.

Bei einem mit einer Flüssigkeit gefüllten Prüfling, dessen Innendruck geringer als atmosphärischer Druck in der äußeren Umgebung des Prüflings ist (z.B. ein Innendruck im Bereich von ca. 50-500 mbar), ist das Schnüffellecksuchverfahren nicht anwendbar, weil im Falle eines Lecks kein Leckagegas nach außen dringt. Zum Beispiel dringt bei Batterien, die mit einem flüssigen Elektrolyt mit niedrigem Dampfdruck befüllt sind und in denen Unterdruck herrscht, im Falle einer Undichtigkeit Luft aus der äußeren Prüflingsumgebung ins Innere des Prüflings. Das Leck ist mit Hilfe einer Schnüffelsonde nicht detektierbar.

Die oben beschriebenen Leckdetektionsverfahren unter Verwendung eines in dem Prüfling enthaltenden Prüfgases sind ebenfalls nicht anwendbar oder zumindest ungenau, weil die Flüssigkeit im Prüfling bei Evakuieren der äußeren Umgebung des Prüflings in die Öffnung oder den Kanal des Lecks gelangt und das Ausströmen eines Prüfgases verhindert oder zumindest erheblich beeinträchtigt. Eine außerhalb des Prüflings erfasste Menge an Prüfgas ist dann nicht mehr repräsentativ für das Vorhandensein oder die Größe eines Lecks im Prüfling.

EP 1 522 838 B1 beschreibt ein Verfahren, bei dem ein mit einem Elektrolyt befüllter Prüfling in einer Prüfkammer enthalten ist, deren Innendruck geringer ist als der Druck innerhalb des Prüflings. Der Prüfkammer wird gereinigte Luft oder Umgebungsluft als Trägergas zugeführt, um aus dem Prüfling austretende Flüssigkeitsbestandteile nach dem Trägergasverfahren einem Detektor zuzuführen.

Vor diesem Hintergrund liegt der Erfindung die Aufgabe zugrunde, ein Leckdetektionsverfahren für einen flüssigkeitsgefüllten Prüfling, dessen Innendruck kleiner oder gleich atmosphärischem Druck ist, bereitzustellen.

Das erfindungsgemäße Verfahren ist definiert durch die Merkmale von Patentanspruch 1.

Demnach wird ein mit einer Flüssigkeit gefüllter Prüfling in eine Prüfkammer eingebracht. Die Flüssigkeit ist im Inneren des Prüflings enthalten. Der Innendruck im Innern des Prüflings ist geringer als atmosphärischer Druck.

Nach Einbringen des Prüflings in die Prüfkammer wird die Prüfkammer auf einen Druck unterhalb des Innendrucks im Prüfling und unterhalb atmosphärischen Drucks evakuiert. Restgasbestandteile, die in der Prüfkammer enthalten sind, werden zusammen mit aus mindestens einer Prüfkammerwand desorbierenden Gasbestandteilen und möglichen Teilen der Flüssigkeit, die durch ein Leck aus dem Prüfling in die Prüfkammer gelangen, abgesaugt und einem Detektor zugeführt, ohne dass der Prüfkammer dabei ein Trägergas zugeführt wird. Aus dem Prüfling austretende Teile oder Teilchen der Flüssigkeit werden mit einem Detektor selektiv nachgewiesen.

Von besonderer Bedeutung für die Erfindung ist dabei, dass der Prüfkammer von außen kein Trägergas zugeführt wird, das beispielsweise aus einer mit der Prüfkammer verbundenen Trägergasquelle stammt oder aus der Umgebung der Prüfkammer entnommen wird. Dabei resultiert insbesondere kein Gasstrom, der an der Oberfläche des Prüflings entlanggeführt wird. Vielmehr werden die aus dem Prüfling austretenden Teile oder Teilchen der Flüssigkeit zusammen mit den Restgasbestandteilen aus der Prüfkammer abgesogen und dem Detektor zugeführt. Ein Trägergas ist nicht erforderlich.

Bei den aus dem Leck ausgetretenen Teilen der Flüssigkeit kann es sich um molekulare Teilchen in verdampfter Form handeln. Die Verdampfung kann beim Austreten aus dem Prüfling erfolgen. Typischerweise verdampft die Flüssigkeit am Ausgang des Leckkanals, der durch die undichte Wand des Prüflings hindurch verläuft. Die Flüssigkeit kann einen Dampfdruck aufweisen, der bei Zimmertemperatur (ca. 15 °C bis 25 °C) geringer ist als 500 mbar. Insbesondere kann es sich bei dem Prüfling um eine Batterie, wie z.B. eine Lithium-Ionen-Batterie, und bei der Flüssigkeit um ein Elektrolyt, wie beispielsweise Dimethylcarbonat, handeln.

Die Prüfkammer kann als starre Prüfkammer mit starr ausgebildeten Wänden ausgebildet sein. Alternativ kann die Prüfkammer auch als Folienkammer ausgebildet sein, die sich dadurch auszeichnet, dass sie mindestens einen flexiblen Wandbereich aufweist, der beim Evakuieren an den Prüfling gesogen wird und das Volumen der Folienkammer reduziert. Zudem bieten Folienkammern insbesondere mit vollständig aus einer flexiblen Folie bestehenden Wänden den Vorteil, dass die an den Prüfling angesogenen Wände den Prüfling stützen, was insbesondere bei einem flexiblen Prüfling von Vorteil ist.

Der Detektor weist einen Sensor auf, der selektiv die zu detektierenden Teile oder Teilchen der Flüssigkeit detektiert und dadurch von anderen Teilen oder Gasen unterscheiden kann. Die Teile der ausgetretenen Flüssigkeit können in flüssiger Form vorliegen und dem Detektor zugeführt werden. Der Detektor muss dabei in der Lage sein, Flüssigkeiten zu analysieren und die in dem Prüfling enthaltene Flüssigkeit selektiv zu detektieren. Die ausgetretene Flüssigkeit kann beispielsweise in Form eines Nebels oder Aerosols dem Detektor zugeführt werden.

Alternativ kann vorgesehen sein, dass die Flüssigkeit beim Austreten aus einem Leck im Prüfling verdampft und die ausgetretenen Teile der Flüssigkeit in verdampfter Form, das heißt in gasförmiger Phase, dem Detektor zugeführt werden. Der Detektor muss dann als Gasdetektor ausgebildet sein und in der Lage sein, Gase zu analysieren und die Flüssigkeit in dem Prüfling in ihrer gasförmigen Phase selektiv von anderen Gasen zu unterscheiden. Entscheidend ist dabei, dass die in dem Prüfling enthaltene Flüssigkeit den Wechsel von der flüssigen Phase zu ihrer gasförmigen Phase erst beim Verlassen des Prüflings, das heißt außerhalb des Prüflings oder in der Öffnung oder dem Kanal des Lecks ausführt. Es wird also kein in dem Prüfling vorhandenes Gas als Prüfgas verwendet, weil die Flüssigkeit innerhalb des Prüflings in flüssiger Form vorliegt, selbst wenn die Flüssigkeit durch ein Leck austritt und dabei verdampft.

Bei dem Detektor für die zu detektierenden Teile der Flüssigkeit kann es sich um einen Gasdetektor handeln, wie z.B. ein Massenspektrometer, einen Gaschromatographen, einen Infrarot-Strahlungsabsorptionsdetektor oder einen Detektor mit chemischen Sensoren oder Halbleitersensoren.

In die Prüfkammer wird kein Trägergas eingebracht. Insbesondere wird der Prüfkammer kein konstanter Trägergasstrom, wie bei den herkömmlichen Trägergasverfahren zur Gaslecksuche, zugeführt. Vielmehr werden die Restgasbestandteile innerhalb der Prüfkammer und die von den Prüfkammerwänden desorbierenden Gasbestandteile genutzt, um aus einem Leck in dem Prüfling in die Prüfkammer gelangende Teile oder Teilchen der Flüssigkeit zu dem Detektor zu transportieren. Es wird also ein Gemisch aus Gasbestandteilen aus dem Inneren der Prüfkammer oder aus den Prüfkammerwänden und aus Teilen oder Teilchen der in dem Prüfling enthaltenen Flüssigkeit dem Detektor zugeführt und mit Hilfe des Detektors analysiert, um die mit dem Gas transportierten Teile der Flüssigkeit zu detektieren.

Vorzugsweise wird der die Teile der Flüssigkeit transportierende Gasstrom dem Detektor erst dann zugeführt, wenn ein Druckgrenzwert in der Prüfkammer bzw. in der Verbindungsleitung zwischen der Prüfkammer und der die Prüfkammer absaugenden Vakuumpumpe erreicht ist. Dieser Druckgrenzwert kann zwischen ca. 2 mbar und 50 mbar betragen und ist vorzugsweise geringer als 20 mbar. Die Vakuumpumpe, bei der es sich vorzugsweise um eine Membranpumpe handelt, kann über ein Ventil mit der Prüfkammer und/oder mit der die Vakuumpumpe und die Prüfkammer verbindenden Gasleitung verbunden sein. Zu Beginn des Evakuierens der Prüfkammer ist das Ventil geschlossen. Bei Erreichen des Druckgrenzwerts wird das Ventil geöffnet und ein Teilstrom gelangt zu dem Detektor, während der übrige Hauptgasstrom weiterhin mit der Membranpumpe abgesaugt wird. Dabei wird insbesondere in Verbindung mit einer Vakuumpumpe in Form einer Membranpumpe eine Akkumulation der aus einem Leck austretenden Flüssigkeitsteile erreicht, anders als bei einem herkömmlichen Trägergasverfahren. Bei Erreichen des Druckgrenzwerts werden die bis dahin akkumulierten Flüssigkeitsteile dem Detektor zugeführt.

Vorteilhafterweise ist vorgesehen, dass der Prüfling in der Prüfkammer mit einem Spülgas gespült wird, um an dem Prüfling anhaftende Teile der Flüssigkeit zu entfernen. Vorzugsweise erfolgt das Spülen des Prüflings mit Spülgas bevor die eigentliche Leckdetektion erfolgt, z.B. vor dem Evakuieren der Prüfkammer.

Es ist denkbar, dass ein Akkumulieren der aus einem Leck ausgetretenen Teile der Flüssigkeit innerhalb der Prüfkammer oder in der Verbindungsleitung während eines Zeitraums erfolgt, bevor die Teile der Flüssigkeit oder das Gemisch aus Restgas und Teilen der Flüssigkeit dem Detektor zur Analyse zugeführt werden.

Eine Kalibrierung kann mit Hilfe eines Testlecks erfolgen, das mit einer Testflüssigkeit befüllt ist. Das Testleck kann als Kapillarleck ausgebildet sein, bei dem die Testflüssigkeit durch eine in der Wand des Testlecks ausgebildete Kapillare mit bekannten Abmessungen austritt. Alternativ kann das Testleck ein Permeations-Flüssigkeitsleck sein, bei dem ein Bereich der Wand des Testlecks als Membran mit bekannten Permeationseigenschaften für die Testflüssigkeit ausgebildet ist. Mit Hilfe einer solchen Kalibrierung kann der Zusammenhang zwischen der Menge der detektierten Teile der Flüssigkeit und der Größe des Lecks ermittelt und archiviert werden, um bei der eigentlichen Leckdetektion nicht nur das Vorhandensein eines Lecks ermitteln zu können, sondern auch dessen Größe.

Erfindungsgemäß kann insbesondere vorgesehen sein, anhand der Detektion der aus einem Leck ausgetretenen Teile der Flüssigkeit die Größe des Lecks zu ermitteln.

Im Folgenden werden anhand der Figuren zwei Ausführungsbeispiele der Erfindung näher erläutert. Es zeigen:
- Fig. 1: ein Blockschaltbild eines ersten Ausführungsbeispiels
- Fig. 2: ein Blockschaltbild eines zweiten Ausführungsbeispiels.

Bei beiden Ausführungsbeispielen ist ein mit einer Flüssigkeit 12 befüllter Prüfling 14 in einer Prüfkammer 16 enthalten. Bei dem Prüfling 14 handelt es sich um eine Batterie, die mit einem flüssigen Elektrolyt gefüllt ist. Die Prüfkammer 16 ist in den vorliegenden Ausführungsbeispielen eine herkömmliche starre Prüfkammer.

Die Prüfkammer 16 ist mit einem Vakuumanschluss 22 versehen, an den eine Vakuumpumpe 24 angeschlossen ist, mit der die Prüfkammer 16 evakuiert werden kann. Hierzu weist die Vakuumpumpe 24 mindestens eine Vakuumpumpe in Form einer Membranpumpe auf. Die Prüfkammer 16 und die Vakuumpumpe 24 sind durch eine Verbindungsleitung 26 gasleitend miteinander verbunden, sodass die Vakuumpumpe 24 über die Verbindungsleitung 26 Gas aus der Prüfkammer 16 absaugen kann.

An die die Vakuumpumpe 24 mit der Prüfkammer 16 verbindende Verbindungsleitung 26 ist ein Detektor 28 zum Analysieren und Detektieren von Teilen der Flüssigkeit 12 angeschlossen. Der Detektor 28 ist bei beiden Ausführungsbeispielen ein selektiver Gasdetektor, beispielsweise in Form eines Massenspektrometers, dessen Sensor selektiv molekulare Teilchen der Flüssigkeit 12 detektiert und von anderen Gasen unterscheiden kann. Der Detektor 28 ist Bestandteil eines massenspektrometrischen Vakuumsystems 20, das eine Vorvakuumpumpe 19 und eine Hochvakuumpumpe 18 zum Evakuieren des Massenspektrometers 28 aufweist.

Der Detektor 28 ist über eine gasleitende Detektionsleitung 21 mit der Verbindungsleitung 26 gasleitend verbunden. Die Detektionsleitung 21 ist mit einer Drossel 38 zum Drosseln des aus der Verbindungsleitung 26 abgezweigten Gasstroms und mit einem Ventil V2 zum selektiven Verschließen der Detektionsleitung 21 versehen. Zur Messung des Drucks innerhalb der Verbindungsleitung 26 ist diese mit einem Drucksensor 17 gasleitend verbunden.

Aus einem Leck in dem Prüfling 14 treten Teile der Flüssigkeit 12 aus und gelangen in die Prüfkammer 16. Beim Austreten der Flüssigkeit 12 aus dem Prüfling 14 kann diese verdampfen, sodass die ausgetretenen Teile der Flüssigkeit 12 in gasförmiger Form vorliegen können.

Der Detektor 28 wird als Massenspektrometer in dem Vakuumsystem 20 mit einem Druck betrieben, der geringer ist, als der Druck innerhalb der Prüfkammer 16 und geringer als der Druck am Verbindungspunkt 40 zwischen der Verbindungsleitung 26 und der Detektionsleitung 21 ist. Bei der erfindungsgemäß zum Absaugen der Prüfkammer 16 verwendeten Membranpumpe 24 wird innerhalb der Prüfkammer 16 jedoch kein Hochvakuum erzeugt. Vielmehr erzeugt die Membranpumpe 24 einen Druck im Bereich von einigen Millibar. Die Membranpumpe 24 saugt aus der Prüfkammer 16 noch vorhandene Restgasbestandteile ab. Zudem desorbieren bei Erreichen eines Drucks im Bereich von ca. 10 mbar innerhalb der Prüfkammer 16 Gasbestandteile von den Wänden der Prüfkammer, die ebenfalls von der Membranpumpe 24 abgesaugt werden. Diese Gasbestandteile, d.h. Restgasbestandteile aus der Prüfkammer 16 und von deren Wänden desorbierende Gasbestandteile, nehmen Teile der Flüssigkeit 12 auf, die durch ein Leck aus dem Prüfling 14 in die Prüfkammer 16 gelangen. Diese Teile der Flüssigkeit 12 werden dem Detektor 28 zugeführt.

Der Vakuumdruck innerhalb der Prüfkammer 16 liegt nach dem Evakuieren bei einigen Millibar. Die Diffusion der aus dem Prüfling 14 ausgetretenen und verdampften Teile der Flüssigkeit 12 ist bei diesem Druck noch träge. Der Transport der ausgetretenen Teile der Flüssigkeit 12 zum Detektor 28 wird mit den Gasbestandteilen beschleunigt, ohne dass ein Trägergas verwendet und der Prüfkammer 16 von außen zugeführt wird.

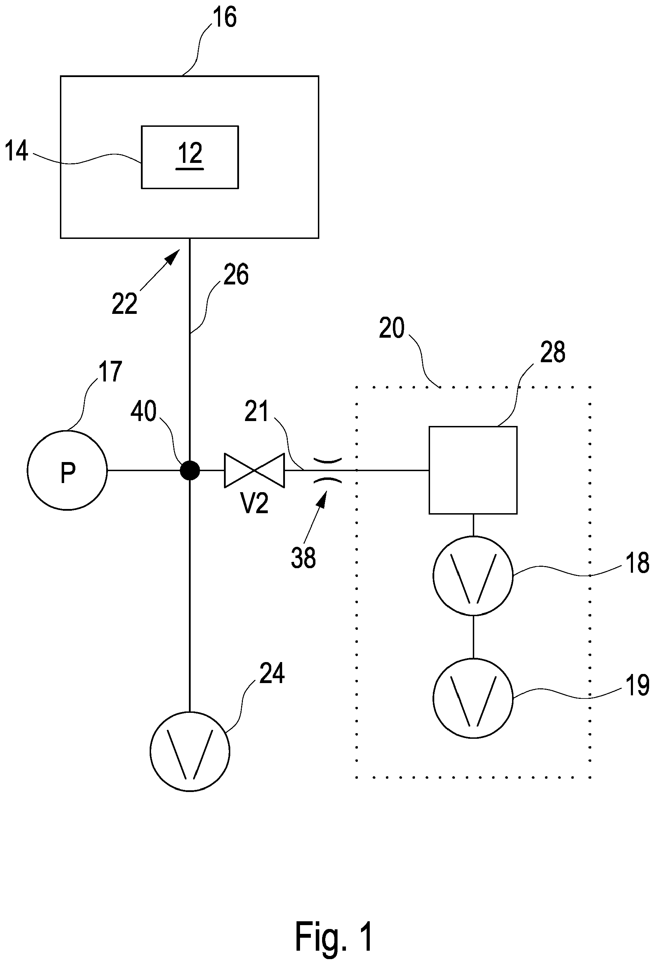

Alternativ ist denkbar, dass eine Akkumulation der aus dem Prüfling 14 ausgetretenen Flüssigkeitsteile innerhalb der Prüfkammer 16 oder innerhalb der Verbindungsleitung 26 erfolgt, bevor die Teile der ausgetretenen Flüssigkeit 12 dem Detektor 20 zugeführt werden. Hierzu ist denkbar, dass zwischen dem Verbindungspunkt 40 und der Membranpumpe 24 ein in Fig. 1 nicht dargestelltes Ventil vorgesehen ist, das bei Erreichen eines ausreichenden Vakuumdrucks innerhalb der Prüfkammer 16 geschlossen wird, um eine Akkumulation der ausgetretenen Flüssigkeitsteile innerhalb der Prüfkammer 16 oder in der Verbindungsleitung 26 zwischen der Prüfkammer 16 und dem nicht dargestellten Ventil zu bewirken, bevor die Detektion erfolgt. Zur Detektion kann das Ventil V2 geöffnet werden. Während der Akkumulationsphase kann das Ventil V2 geschlossen oder geöffnet sein.

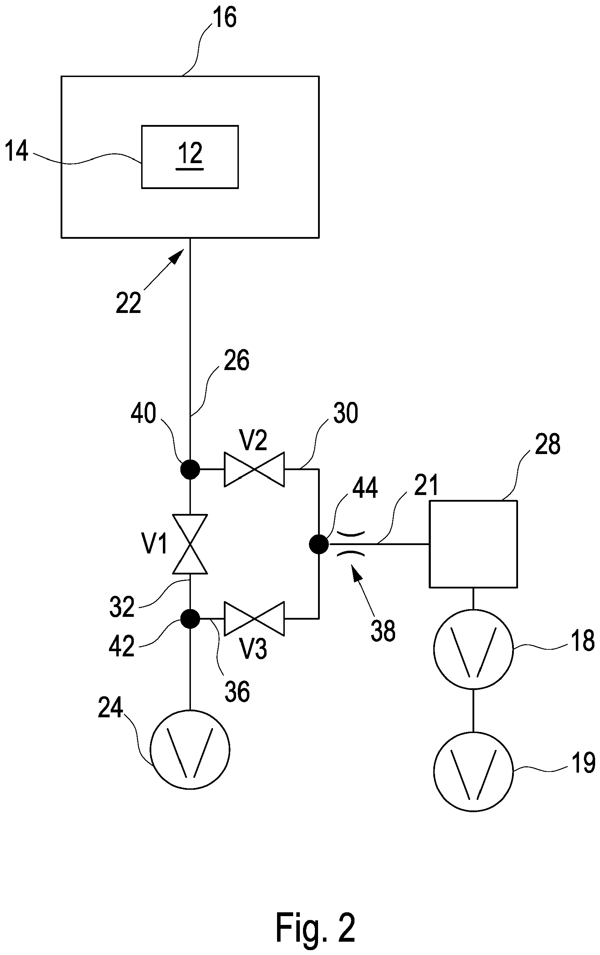

Das in Fig. 2 dargestellte zweite Ausführungsbeispiel unterscheidet sich von dem ersten Ausführungsbeispiel gemäß Fig. 1 dadurch, dass der das Ventil V2 aufweisende Abschnitt 30 der Detektionsleitung 21 durch einen ein weiteres Ventil V3 aufweisenden Abschnitt 36 überbrückt ist, sodass die Ventile V2, V3 parallel geschaltet sind. In dem Abschnitt 32 der Verbindungsleitung 26 ist zwischen dem Verbindungspunkt 40 der Verbindungsleitung 26 mit dem Abschnitt 30 und dem Verbindungspunkt 42 zwischen der Verbindungsleitung 26 und dem Abschnitt 36 ein Ventil V1 vorgesehen. Zum Evakuieren der Prüfkammer 16 ist das Ventil V1 geöffnet. Das Ventil V2 ist dann geschlossen. Entsprechendes gilt für das Ventil V3. Bei geschlossenen Ventilen V2, V3 und bei geöffnetem Ventil V1 wird mit der Vakuumpumpe 24 nur die Prüfkammer 16 evakuiert. Bei dem Detektor 28 des zweiten Ausführungsbeispiels handelt es sich ebenfalls um ein Massenspektrometer mit eigenständigem Vakuumsystem. Der Einlassbereich zum Massenspektrometer wird ebenfalls über die Vakuumpumpe 24 evakuiert. Hierzu bleibt das Ventil V2 geschlossen, während das Ventil V1 geschlossen und das Ventil V3 geöffnet wird, um den Einlassbereich zum Massenspektrometer auf den erforderlichen Vakuumdruck zu evakuieren. Nach erfolgter Evakuierung wird zum Messbetrieb das Ventil V1 geschlossen und die Ventile V2 und V3 werden geöffnet, so dass über die Vakuumpumpe 24 das Messmedium aus der Prüfkammer 16 am Detektor 28 vorbei transportiert wird.

In die Prüfkammer 16 gelangen im Falle eines Lecks im Prüfling 14 Teile der in dem Prüfling 14 enthaltenen Flüssigkeit 12. Bei der Flüssigkeit kann es sich um Dimethylcarbonat handeln, das als Elektrolyt in einer Lithium-Ionen-Batterie verwendet wird. In der Lithium-Ionen-Batterie herrscht ein Vakuumdruck, der größer ist als der Druck innerhalb der Prüfkammer 16 im Bereich außerhalb des Prüflings 14, nach dem die Prüfkammer 16 evakuiert wurde. Das flüssige Elektrolyt verdampft beim Austreten aus dem Prüfling 14 durch ein Leck, sodass die zu detektierenden Teile der Flüssigkeit 12 in Form von molekularen Teilchen einer gasförmigen Phase vorliegen können.

Die Teile der Flüssigkeit 12 werden durch die Prüfkammer 16 hindurch und über die Leitungen 26, 30, 21 in den Detektor 28 transportiert, und über die Leitung 36 weiter zur Pumpe 24 geführt. Dabei bildet sich ein Gemisch aus Gasbestandteilen, die aus dem Inneren der Prüfkammer 16 und von den Wänden der Prüfkammer 16 stammen, und transportierten Teilen der Flüssigkeit 12. Der selektive Sensor des massenspektrometrischen Detektors 28 detektiert die Teile der Flüssigkeit 12 und ist in der Lage, diese von den Gasbestandteilen der Prüfkammer 16 zu unterscheiden. Das Detektieren der Teile der aus dem Leck des Prüflings 14 ausgetretenen Flüssigkeit 12 dient als Hinweis auf das Vorhandensein eines Lecks in dem Prüfling. Anhand der Menge der detektierten Teile der Flüssigkeit 12 kann auf die Größe eines Lecks geschlossen werden.

Zudem kann eine Akkumulation der aus einem Leck im Prüfling 14 austretenden Teile der Flüssigkeit 12 innerhalb der Prüfkammer 16 erfolgen, bevor die Detektion erfolgt. Hierzu werden die Ventile V1, V3 während der Akkumulationsphase geschlossen. Während der Akkumulationsphase kann ergänzend auch noch das Ventil V2 geschlossen sein. Nach Verstreichen einer vorgegebenen Zeit wird das Ventil V2 geöffnet, sodass die akkumulierten Teile der Flüssigkeit 12 dem Detektor 28 zugeführt werden.

Das akkumulierte Gas kann auch nach der Akkumulationsphase durch die Gasbestandteile aus der Prüfkammer 16 zum Detektor 28 hin transportiert werden. Hierzu wird der evakuierten Prüfkammer 16 kein Trägergas von außen zugeführt. Bei verschlossener Prüfkammer 16 wird gewartet, bis sich innerhalb einer vorgegebenen Zeitdauer Teile der Flüssigkeit 12 in der Prüfkammer 16 angesammelt haben. Der Detektor 28 wird mit Hilfe der Vakuumpumpen 18, 19 auf einen geringeren Druck gebracht als der in der Prüfkammer 16 herrschende Druck. Bei Öffnen des Ventils V2 werden die akkumulierten Teile der Flüssigkeit 12 zum Detektor 18 transportiert und dort detektiert.

Der Leitwert der Drossel 38 und der Schwellenwert des Drucks vor (in den Figuren links) der Drossel 38, bei dem das Ventil V2 geöffnet wird, sind derart gewählt, dass der Gaseinlass über die Drossel 38 in das Kammervolumen des Massenspektrometers 28 einen Druckanstieg von nicht mehr als 10⁻⁴ mbar bewirkt. Bevorzugt beträgt der Druckschwellenwert bei Laborbedingungen ca. 5 mbar.

Mit dem Massenspektrometer 28 wird ein Signal auf einer für eine charakteristische Komponente der Flüssigkeit 12 (Elektrolytkomponente) charakteristische Mess-Masse erzeugt. Das Messsignal wird mit einem Schwellenwert verglichen, wobei bei Überschreiten des Schwellenwerts ein Leck im Prüfling 14 als vorhanden gilt. Nach der Messung wird das Ventil V2 geschlossen, die Prüfkammer belüftet und ggf. der Prüfling 14 aus der Prüfkammer 16 entnommen.

Das erfindungsgemäße Verfahren bedarf keiner hochwertigen Vakuumpumpe zum Evakuieren der Prüfkammer 16, wie z.B. einer Hochvakuumpumpe, sondern lediglich einer einfachen Vakuumpumpe, wie z.B. einer Membranpumpe, die einen Enddruck von weniger als 10 mbar erreichen kann.

Ein wesentlicher Unterschied zwischen den beiden Ausführungsbeispielen besteht darin, dass bei dem Ausführungsbeispiel in Fig. 2 nach Schließen des Ventils V1 und Öffnen der Ventile V2, V3 nach Unterschreiten des festgelegten Druckschwellenwerts ein kürzerer Weg von der Drossel 38 bis hin zum Massenspektrometer 28 zurückzulegen ist, als bei dem Ausführungsbeispiel in Fig. 1. Im Bereich zwischen der Drossel 38 und dem Massenspektrometer 28 ist innerhalb der Detektionsleitung 21 der Druck gering, nämlich geringer als 10⁻⁴ mbar, sodass molekular freie Bewegungsbedingungen für das Gas in diesem Bereich vorliegen. Die Zeitdauer der Ausbreitung der Gase bis hin zum Massenspektrometer 28 ist dadurch vernachlässigbar.

Auf der vom Massenspektrometer abgewandten Seite der Drossel 38, in den Figuren also links der Drossel 38, beträgt der Druck innerhalb der Leitungen 26, 30, 32, 36 zum Beispiel 5 mbar. Dabei herrschen viskose Strömungsverhältnisse vor, wodurch das Messgas entlang dieser Strecke durch Restgas hindurch diffundieren muss, was eine zeitliche Verzögerung bewirkt. Diese Diffusionsstrecke ist in Fig. 1 von dem Verbindungspunkt 40 zwischen der Verbindungsleitung 26 und der Vakuumleitung 21 bis hin zur Drossel 38 länger als die Diffusionsstrecke in Fig. 2 zwischen dem Verbindungspunkt 44 der Leitungen 30, 36, 21 und der Drossel 38.

## Patentansprüche

1. Verfahren zur Dichtheitsprüfung eines mit einer Flüssigkeit (12) gefüllten Prüflings (14), der einen Innendruck aufweist, der geringer als atmosphärischer Druck ist, mit den folgenden Schritten
Einbringen des Prüflings (14) in eine Prüfkammer (16),
Evakuieren der Prüfkammer (16) auf einen Druck, der geringer ist als der Innendruck innerhalb des Prüflings (14),
Absaugen von Restgasbestandteilen aus der Prüfkammer zusammen mit von einer Wand der Prüfkammer desorbierenden Gasbestandteilen und Teilen der Flüssigkeit, die durch ein Leck in dem Prüfling aus diesem austreten, ohne dass der Prüfkammer von außen ein Trägergas zugeführt wird, und
Transportieren der abgesaugten Restgasbestandteile zusammen mit den aus dem Prüfling ausgetretenen Teilen der Flüssigkeit zu einem Detektor (28),
**gekennzeichnet durch**
Detektieren von durch ein Leck in dem Prüfling (14) ausgetretener Teile der Flüssigkeit (12) mit einem Detektor (28), wobei kein in dem Prüfling vorhandenes Gas als Prüfgas für die Leckagedetektion verwendet wird.

2. Verfahren nach Anspruch 1, **dadurch gekennzeichnet, dass** die transportierten Teile der Flüssigkeit (12) molekulare Teilchen in verdampfter Form sind.

3. Verfahren nach Anspruch 1 oder 2, **dadurch gekennzeichnet, dass** die Flüssigkeit (12) bei Zimmertemperatur einen Dampfdruck von weniger als 500 mbar aufweist.

4. Verfahren nach einem der vorhergehenden Ansprüche, **dadurch gekennzeichnet, dass** der Prüfling (14) eine Batterie und die Flüssigkeit ein Elektrolyt ist.

5. Verfahren nach einem der vorhergehenden Ansprüche, **dadurch gekennzeichnet, dass** die Prüfkammer (16) eine starre Prüfkammer oder eine Folienkammer ist.

6. Verfahren nach einem der vorhergehenden Ansprüche, **dadurch gekennzeichnet, dass** der Detektor (28) einen für die zu detektierenden Teile der Flüssigkeit selektiven Sensor aufweist.

7. Verfahren nach Anspruch 6, **dadurch gekennzeichnet, dass** der Detektor (28) ein Gasdetektor, wie z.B. ein Massenspektrometer, ein Gaschromatograph, ein Infrarot-Absorptionsdetektor oder ein Detektor mit chemischen oder Halbleitersensoren ist.

8. Verfahren nach einem der vorhergehenden Ansprüche, **dadurch gekennzeichnet, dass** der Detektor (28) in einem Vakuumsystem mit einem geringeren Druck als der Druck innerhalb der Prüfkammer (16) betrieben wird.

9. Verfahren nach einem der vorhergehenden Ansprüche, **dadurch gekennzeichnet, dass** die Gasbestandteile und die zu detektierenden Teile der Flüssigkeit dem Detektor (28) erst dann zugeführt werden, wenn ein vorgegebener Druckgrenzwert in der Prüfkammer erreicht ist.

10. Verfahren nach Anspruch 9, **dadurch gekennzeichnet, dass** der Druckgrenzwert im Bereich zwischen 2-100 mbar liegt und vorzugsweise weniger als 10 mbar beträgt.

11. Verfahren nach Anspruch 9 oder 10, **dadurch gekennzeichnet, dass** der Detektor über ein Ventil (V2) mit der Prüfkammer (16) verbunden ist, welches zu Beginn des Evakuierens der Prüfkammer geschlossen ist und erst bei Erreichen des Druckgrenzwerts geöffnet wird.

12. Verfahren nach einem der vorhergehenden Ansprüche, **dadurch gekennzeichnet, dass** der Prüfling (14) nach Einbringen in die Prüfkammer (16) mit einem Spülgas gespült wird.

13. Verfahren nach einem der vorhergehenden Ansprüche, **dadurch gekennzeichnet, dass** eine Akkumulation der aus dem Prüfling (14) ausgetretenen Teile der Flüssigkeit (12) in der Prüfkammer (16) oder in der Verbindungsleitung während eines Zeitraumes erfolgt, bevor das Detektieren der Teile mit dem Detektor (28) erfolgt.

14. Verfahren nach einem der vorhergehenden Ansprüche, **dadurch gekennzeichnet, dass** vor dem Einbringen des Prüflings (14) in die Prüfkammer (16) eine Kalibrierung des Detektors mit einem eine Testflüssigkeit enthaltenden Testleck durchgeführt wird, in dem das Testleck in die Prüfkammer eingebracht wird, die Prüfkammer evakuiert wird und aus dem Testleck austretende Teile der Flüssigkeit mit dem Detektor (28) detektiert werden.

## Claims

1. A method for a tightness test of a test object (14) filled with a liquid (12), said test object having an internal pressure which is lower than atmospheric pressure, comprising the following steps:
inserting the test object (14) into a test chamber (16),
evacuating the test chamber (16) to a pressure which is lower than the internal pressure inside the test object (14),
drawing off residual gas components from the test chamber together with gas components desorbing from a wall of the test chamber and parts of the liquid escaping from the test object through a leak in the latter without any carrier gas being fed to the test chamber from outside, and
transporting the drawn-off residual gas components together with the parts of the liquid escaped from the test object to a detector (28),
**characterized by**
the detection of parts of the liquid (12) escaped through a leak in the test object (14) by means of a detector (28), wherein no gas contained in the test object is used as a test gas for leak detection.

2. The method according to claim 1, **characterized in that** the transported parts of the liquid (12) are molecular particles in an evaporated form.

3. The method according to claim 1 or 2, **characterized in that** the liquid (12) has a vapor pressure of less than 500 mbar at room temperature.

4. The method according to any one of the preceding claims, **characterized in that** the test object is a battery (14) and the liquid is an electrolyte.

5. The method according to any one of the preceding claims, **characterized in that** the test chamber (16) is a rigid test chamber or a film chamber.

6. The method according to any one of the preceding claims, **characterized in that** the detector (28) comprises a selective sensor for the parts to be detected of the liquid.

7. The method according to claim 6, **characterized in that** the detector (28) is a gas detector, such as e.g. a mass spectrometer, a gas chromatograph, an infrared absorption detector or a detector having chemical or semiconductor sensors.

8. The method according to any one of the preceding claims, **characterized in that** the detector (28) is operated in a vacuum system having a lower pressure than the pressure inside the test chamber (16).

9. The method according to any one of the preceding claims, **characterized in that** the gas components and the parts to be detected of the liquid are fed to the detector (28) only when a predefined pressure limit value has been reached in the test chamber.

10. The method according to claim 9, **characterized in that** the pressure limit value lies in the range from 2-100 mbar and is preferably lower than 10 mbar.

11. The method according to claim 9 or 10, **characterized in that** the detector is connected to the test chamber (16) via a valve (V2) which is closed at the beginning of the evacuation of the test chamber and is opened only when the pressure limit value has been reached.

12. The method according to any one of the preceding claims, **characterized in that** the test object (14) is flushed with a flushing gas after insertion into the test chamber (16).

13. The method according to any one of the preceding claims, **characterized in that** the parts of the liquid (12) escaped from the test object (14) accumulate in the test chamber (16) or in a connecting line during a time period before the parts are detected by means of the detector (28).

14. The method according to any one of the preceding claims, **characterized in that** before the test object (14) is inserted into the test chamber (16) the detector is calibrated with the aid of a test leak containing a test liquid by inserting the test leak into the test chamber, evacuating the test chamber and detecting parts of the liquid escaping through the test leak by means of the detector (28).

## Revendications

1. Procédé de test d'étanchéité d'un sujet de test (14) rempli d'un liquide (12) présentant une pression interne inférieure à la pression atmosphérique, comprenant les étapes suivantes consistant à :
introduire le sujet de test (14) dans une chambre de test (16),
mettre sous vide la chambre de test (16) à une pression qui est inférieure à la pression interne à l'intérieur du sujet de test (14) ;
extraire des constituants de gaz résiduel hors de la chambre de test par aspiration, conjointement avec les constituants gazeux qui se désorbent d'une paroi de la chambre de test et des parties du liquide qui sont sorties du sujet de test à travers une fuite dans ledit sujet de test, sans qu'un gaz porteur soit introduit dans la chambre de test depuis l'extérieur ; et
transporter vers un détecteur (28) les constituants de gaz résiduel extraits par aspiration conjointement avec les parties du liquide qui sont sorties du sujet de test,
**caractérisé par** l'étape consistant à
détecter au moyen d'un détecteur (28) de parties du liquide (12) qui sont sorties à travers une fuite dans le sujet de test (14), aucun gaz présent dans le sujet de test n'étant utilisé comme gaz de test pour la détection de fuite.

2. Procédé selon la revendication 1, **caractérisé en ce que** les parties transportées du liquide (12) sont des particules moléculaires sous forme évaporée.

3. Procédé selon la revendication 1 ou 2, **caractérisé en ce que** le liquide (12) présente à température ambiante une pression de vapeur inférieure à 500 mbar.

4. Procédé selon l'une quelconque des revendications précédentes, **caractérisé en ce que** le sujet de test (14) est une batterie et le liquide est un électrolyte.

5. Procédé selon l'une quelconque des revendications précédentes, **caractérisé en ce que** la chambre de test (16) est une chambre de test rigide ou une chambre à film.

6. Procédé selon l'une quelconque des revendications précédentes, **caractérisé en ce que** le détecteur (28) comprend un capteur sélectif pour les parties du liquide à détecter.

7. Procédé selon la revendication 6, **caractérisé en ce que** le détecteur (28) est un détecteur de gaz tel qu'un spectromètre de masse, un chromatographe en phase gazeuse, un détecteur d'absorption infrarouge ou un détecteur à capteurs chimiques ou à semi-conducteurs.

8. Procédé selon l'une quelconque des revendications précédentes, **caractérisé en ce que** le détecteur (28) fonctionne dans un système de vide avec une pression inférieure à la pression à l'intérieur de la chambre de test (16).

9. Procédé selon l'une quelconque des revendications précédentes, **caractérisé en ce que** les constituants gazeux et les parties du liquide à détecter ne sont amenés au détecteur (28) que lorsqu'une valeur limite de pression prédéfinie est atteinte dans la chambre de test.

10. Procédé selon la revendication 9, **caractérisé en ce que** la valeur limite de pression est comprise entre 2 et 100 mbar et est de préférence inférieure à 10 mbar.

11. Procédé selon la revendication 9 ou 10, **caractérisé en ce que** le détecteur est relié à la chambre de test (16) par l'intermédiaire d'une soupape (V2) qui est fermée au début de l'évacuation de la chambre de test et qui n'est ouverte que lorsque la valeur limite de pression est atteinte.

12. Procédé selon l'une quelconque des revendications précédentes, **caractérisé en ce que** le sujet de test (14) est rincé avec un gaz de rinçage après son introduction dans la chambre de test (16).

13. Procédé selon l'une quelconque des revendications précédentes, **caractérisé en ce qu'**une accumulation des parties du liquide (12) sortant du sujet de test (14) a lieu dans la chambre de test (16) ou dans la conduite de raccordement pendant une période de temps avant que la détection des parties ait lieu avec le détecteur (28).

14. Procédé selon l'une quelconque des revendications précédentes, **caractérisé en ce qu'**avant l'introduction du sujet de test (14) dans la chambre de test (16), un calibrage du détecteur est effectué avec une fuite étalon contenant un liquide de test, la fuite étalon étant introduite dans la chambre de test, la chambre de test étant évacuée et des parties du liquide sortant de la fuite étalon étant détectées avec le détecteur (28).
